# EUROPEAN PATENT SPECIFICATION

(11) **EP 0 692 341 B1**
(45) Date of publication and mention of the grant of the patent: **15.03.2000**
(21) Application number: 94110080.2
(22) Date of filing: 29.06.1994
(51) Int. Cl.: B24B 41/04, B23Q 1/70

(54) **Chuck particularly for machining marble and the like**
Spannfutter insbesondere zum Bearbeiten von Marmor und dergleichen
Mandrin en particulier pour l'usinage du marbre et similaire

(43) Date of publication of application: 17.01.1996
(73) Proprietor: FA.PE.MAC.SPA, 31037 LORIA (TREVISO) (IT)
(72) Inventor: Pegoraro, Ermenegildo, 31037 Castione di Loria, (Treviso) (IT)
(74) Representative: Modiano, Guido, Dr.-Ing.

(56) References cited:
- DE-C- 966 306
- FR-A- 2 204 991
- FR-A- 2 370 553
- NL-C- 9 535
- PATENT ABSTRACTS OF JAPAN vol. 11, no. 241 (M-614) 7 August 1987 & JP-A-62 054 667 (NIPPEI TOYAMA CORP.) 10 March 1987
- SOVIET PATENTS ABSTRACTS Section PQ, Week 9339, 17 November 1994 Derwent Publications Ltd., London, GB; Class P61, AN 93-310321 & SU-A-1 763 159 (KIVOROZHRUDMASH MINING SCI PRODN ASSOC) 23 September 1992

## Description

The present invention relates to a chuck which is used in various fields and particularly in the machining of marble and the like to shape and/or polish the edges of slabs in the most disparate shapes.

Machines suitable to shape or polish slabs of stony material are currently known which are essentially constituted by a machining surface on which the slab is kept motionless and is shaped by a movable chuck assembly that produces the intended geometrical shapes.

The mills of the chuck assembly can thus be mounted on a support which is rotatable with respect to suitable gears which are laterally rigidly coupled to the frame of the machine so as to allow to obtain, for example, a torus-like profile.

In these known machines, in which machining thus occurs essentially in a straight line, there is a large number of mills arranged sequentially with respect to one another.

The slab of stony material is therefore initially machined and then polished: this last process, however, cannot always be achieved in an optimum manner since, due to the wear of the abrasive grinding wheels, after some time said grinding wheels no longer polish the slab uniformly.

The user is therefore periodically forced to manually polish the slabs and therefore to perform a finishing operation which can no longer be achieved by the machine.

As a partial solution to this drawback, it is known to manufacture machines wherein the tools that support the abrasive grinding wheels are subjected to discrete movements according to preset machining times; even this solution, however, is not optimum, since optimum polishing is not always achieved due to the fact that each slab of stony material has a specific and well-defined hardness.

All this either produces a clearance between the abrasive grinding wheel and the slab of stony material after a given time, or causes excessive abrasion due to the fact that the discrete movement applied to the grinding wheel has not taken into account the greater hardness of the material.

FR-A-2 370 553 discloses a chuck for grinding and polishing comprising a motor driven first shaft which is connected to a second flexible transmission shaft which interacts with a connecting flange to convey the rotative motion of the motor to a tool carrying pin. The tool carrying pin is provided with an abrasive element. Moreover, a compression spring is provided to vertically reposition the tool carrying pin along the axis of the first shaft. The tool carrying pin does however not mantain always the same orientation to the workpiece, because its axis can be inclined with respect to the axis of the first shaft.

The principal aim of the present invention is therefore to eliminate the drawbacks described above in known types, by providing a chuck that allows to achieve optimum polishing of slabs of stony material and thus of marbles and the like independently of the degree of wear of the grinding wheels and of the hardness of said slabs.

Within the scope of this aim, an important object is to provide a chuck wherein optimum polishing is achieved by using a structure that is simple and can be obtained with known machines and equipment.

Another object is to provide a chuck that is reliable and safe in use and has low manufacturing costs.

This aim, these objects and others which will become apparent hereinafter are achieved by a chuck particularly for machining marble and the like as defined in the appended claims.

Further characteristics and advantages of the invention will become apparent from the following detailed description of a particular but not exclusive embodiment thereof, illustrated only by way of non-limitative example in the accompanying drawings, wherein:
figure 1 is a sectional view of the chuck;
figure 2 is a sectional view, taken along the plane II-II of figure 1;
figure 3 is a view, similar to the preceding one, of the condition in which the third floating shaft is axially offset with respect to the first shaft of the motor.

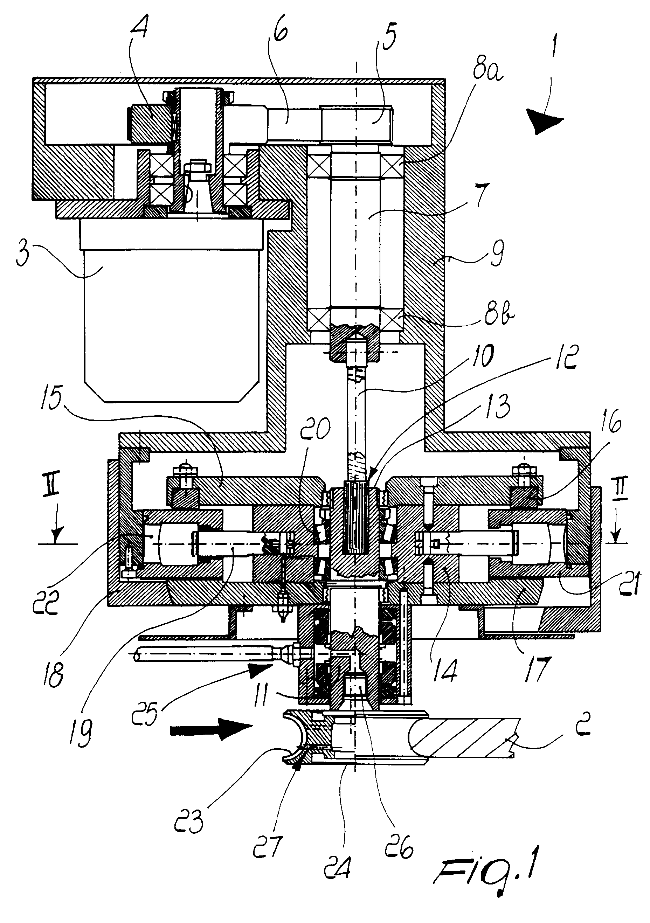

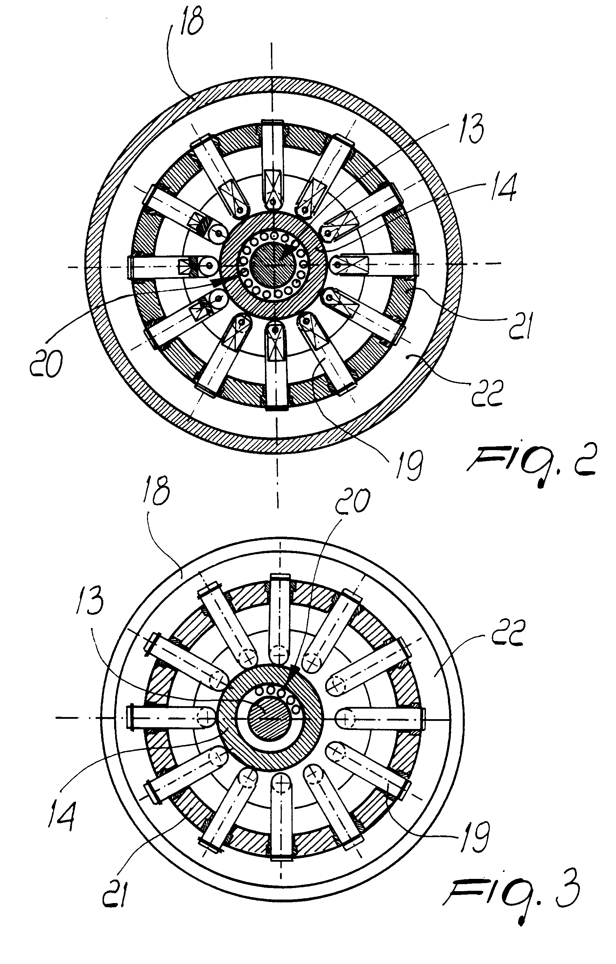

With reference to the above figures, the reference numeral 1 designates the chuck, particularly usable for machining stony products 2 such as marble or the like, which comprises a variable-speed motor 3 which transmits motion to a first fixed shaft 7 by means of a first driving pulley 4 and a second driven pulley 5 which are mutually connected by an appropriately provided belt 6.

Said first fixed shaft interacts with appropriately provided first bearings 8a and 8b which are arranged inside a suitable body 9.

The end of a second flexible transmission shaft 10 is keyed to the free ends of the first shaft 7; the other end of said second shaft interacts with means which are suitable to transmit motion to a third floating shaft 11.

Said means are constituted by a grooved secondary shaft 12 which is present at one end of the second flexible transmission shaft 10 and slides axially with respect to a complementarily shaped bush 13.

Said third floating shaft 11 can naturally rotate with respect to its own axis and can also move radially in all directions by virtue of the presence of suitable means, such as a floating central support 14 which is shaped like an annulus; a flange 15 is associated in an upward region with said support and supports a first sliding block 16, whereas a second sliding block 17 is associated with said support in a downward region.

Said first flange 15 and said second sliding block 17 are accommodated within the body 9 which is closed in a downward region by a suitable self-centering locking ring 18.

The central floating support 14, together with the flange 15 and with the first and second sliding blocks, is constantly in contact with a plurality of pistons 19 which are arranged radially with respect to the third floating shaft 11; said pistons push by means of suitable second bearings 20.

Each one of said pistons 19 is connected to a suitable piston body 21, which is interposed between the first sliding block 16 and the second sliding block 17, which act as a guide for the radial movement of said pistons.

Said piston body 21 comprises an air reservoir 22 having a circular shape and from which the pistons protrude radially.

The air inside the reservoir can thus have a pressure that is adjustable according to the requirements.

In fact, by varying the internal pressure of the reservoir the thrust of the pistons 19 decreases or increases, producing a consequently greater thrust at the abrasive material 23 which is connected to a mill 24 which is rigidly coupled to the free end of the third floating shaft 14 which protrudes outside the ring 18.

Said self-centering locking ring acts at the second sliding block 17: by tightening it, said ring locks the translatory motion of said second sliding block and thus also locks the movement of the third floating shaft 11.

This solution allows to use the chuck by locking for example the axis of the third floating shaft 11 at the axis of the first fixed shaft 7, so as to use the chuck like a usual and known edge shaping chuck.

The innovative operation of the chuck instead resides in that the third floating shaft 11 is made to work at the edge of the stony material 2 so that it is axially offset with respect to the axis of the first fixed shaft 7: in this manner a constant thrust of the abrasive material 23 on the material is achieved, since the pistons 19 tend to axially align the third floating shaft 11 with the first fixed shaft 7.

By varying the pressure inside the reservoir 22 a greater or smaller thrust of the pistons and thus a greater or smaller thrust of the abrasive material towards the material to be machined is in fact achieved.

It has thus been observed that the invention has achieved the intended aim and objects, a chuck having been provided which allows to polish the edges of stony materials such as marble and the like in an optimum manner, since continuous contact of the abrasive material on the edge of the material is ensured, thus eliminating any clearance due to the wear of said abrasive material.

Polishing is optimum even if it is necessary to machine stony materials that have different degrees of hardness, since the thrust of the pistons on the third floating shaft is optimum and therefore the abrasive material is constantly kept in contact with the material to be polished.

Advantageously, there is a suitable fluid-actuated joint 25 which allows to introduce water in an appropriately provided channel 26 arranged inside the third floating shaft 11 and connected to the underlying mill 24 and, by means of suitable ducts 27, to the outer lateral surface of the abrasive material 23, so as to allow to cool the surface of said abrasive material that works in contact with the stony material 2.

The invention is naturally susceptible to numerous modifications and variations, all of which are within the scope of the same inventive concept.

The materials and the dimensions which constitute the individual components of the chuck may also naturally be the most pertinent according to the specific requirements.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Chuck particularly for machining marble and the like comprising a motor (3) provided with a first fixed shaft (7) which is connected to a second flexible transmission shaft (10) which interacts with means (12) that are suitable to transmit motion to a third floating shaft (11) provided with an abrasive or a diamondized element (23), means (19) being arranged radially with respect to said third floating shaft (11) to reposition said third floating shaft (11) along the same axis as said first fixed shaft (7), said third floating shaft (11) being both rotatable to its own axis and movable radially with respect thereto.

2. Chuck according to claim 1, characterized in that said motor (3) is a variable-speed motor, said motor (3) transmitting motion to said first fixed shaft (7) by means of a first driving pulley (4) and of a second driven pulley (5) which are mutually connected by a belt (6), said first fixed shaft (7) interacting with first bearings (8a, 8b) contained within a suitable body (9).

3. Chuck according to claims 1 or 2, characterized in that the end of said second flexible transmission shaft (10) is keyed at the free end of said first fixed shaft (7) and is shaped, at its other end, so as to form a grooved secondary shaft (12) which is axially slideable with respect to a complementarily grooved bush (13).

4. Chuck according to claim 3, characterized in that said bush (13) is rigidly coupled to said third floating shaft (11).

5. Chuck according to one or more of the preceding claims, characterized in that it comprises: a floating central support (14) which is shaped like an annulus; a flange (15) which is coupled to said floating central support (14) at an upward region of said floating central support (14) facing said second flexible transmission shaft (10), said flange (15) supporting a first sliding block (16); and a second sliding block (17) which is coupled to said floating central support (14) in a downward region of said floating central support (14) facing said third floating shaft (11),
said first and second sliding blocks (16, 17) supporting said means (19) to reposition said third floating shaft (11).

6. Chuck according to claim 5, characterized in that said first flange (15) and said first and second sliding blocks (16, 17) are accommodated within said suitable body (9), said suitable body (9) being coupled to a self-centering locking ring (18) in a downward region of said suitable body (9), said selfcentering locking ring (18) closing said suitable body (9) at said downward region thereof,
said self-centering locking ring (18) acting on said second sliding block (17), the tightening of said self-centering locking ring (18) locking the translatory motion of said second sliding block (17).

7. Chuck according to claims 5 or 6, characterized in that said means (19) to reposition said third floating shaft (11) comprises a plurality of pistons (19) which is associated radially and slidingly with said floating central support (14), said pistons (19) being suitable to push, and pull said central floating support (14) and thus said third floating shaft (11) by virtue of suitable second bearings (20).

8. Chuck according to claim 7, characterized in that each one of said pistons (19) is slidingly and sealingly associated, at one end, with a piston body (21) which is interposed between said first and said second sliding blocks (16, 17), each said piston body (21) acting as a guide for the movement of a respective one of said pistons (19) radially with respect to said third floating shaft (11).

9. Chuck according to claim 8, characterized in that each said piston body (21) is circular and connects to an annular air reservoir (22) from which said pistons (19) protrude radially.

10. Chuck according to claim 9, characterized in that said annular air reservoir (22) is connected to at least one delivery and to at least one intake to determine the pressure inside it.

11. Chuck according to one or more of the preceding claims, characterized in that said third floating shaft (11) has one end which protrudes outside said self-centering locking ring (18) and with which a tool, such as for example a mill (24), is associated, said abrasive or diamondized element (23) being associated with said mill (24) for machining the edge of a stony material (2).

12. Chuck according to one or more of the preceding claims, characterized in that it comprises a fluid-actuated joint (25) for introducing water inside a channel (26) which is formed in said third floating shaft (11) and is connected to said underlying tool (24) and, by means of suitable ducts (27), to the outer lateral surface of said abrasive or diamondized material (23).

13. Chuck according to one or more of the preceding claims, characterized in that said means (19) to reposition said third floating shaft (11) are adapted to radially move in all directions said third floating shaft (11) in respect to its own axis.

## Patentansprüche

1. Werkzeugkopf insbesondere zum Bearbeiten von Marmor u.ä., mit einem Motor (3) mit einer ersten, ortsfesten Welle (7), die mit einer zweiten, flexiblen Übertragungswelle (10) verbunden ist, welche mit Mitteln (12) in Wechselwirkung steht, die zum Übertragen einer Bewegung auf eine dritte, ortsveränderliche Welle (11) geeignet sind, die mit einem reibenden oder einem diamantenen Element (23) versehen ist, und mit Mitteln (19), die radial zu der dritten, ortsveränderlichen Welle (11) angeordnet sind, um diese längs derselben Achse wie die erste, ortsfeste Welle (7) zu verstellen, wobei die dritte, ortsveränderliche Welle (11) um ihre eigene Achse drehbar und dazu radial bewegbar ist.

2. Werkzeugkopf nach Anspruch 1, dadurch **gekennzeichnet**, daß der Motor (3) ein drehzahlvariabler Motor ist und eine Bewegung auf die erste, ortsfeste Welle (7) mit einem ersten, treibenden Rad (4) und einem zweiten, angetriebenen Rad (5) überträgt, die über einen Riemen (6) verbunden sind, und daß die erste, ortsfeste Welle (7) mit ersten Lagern (8a, 8b) in einem geeigneten Gehäuse (9) gelagert ist.

3. Werkzeugkopf nach Anspruch 1 oder 2, dadurch **gekennzeichnet**, daß das Ende der zweiten, flexiblen Übertragungswelle (10) an dem freien Ende der ersten, ortsfesten Welle (7) verkeilt und an ihrem anderen Ende so geformt ist, daß sie eine genutete Sekundärwelle (12) bildet, die in einer komplementär genuteten Hülse (13) axial verschiebbar ist.

4. Werkzeugkopf nach Anspruch 3, dadurch **gekennzeichnet**, daß die Hülse (13) mit der dritten, ortsveränderlichen Welle (11) starr gekoppelt ist.

5. Werkzeugkopf nach einem oder mehreren der vorhergehenden Ansprüche, dadurch **gekennzeichnet**, daß er enthält: einen ortsveränderlichen zentralen ringartigen Träger (14); einen Flansch (15), der mit dem ortsveränderlichen zentralen Träger (14) in dessen oberem Bereich gekoppelt ist, welcher der zweiten, flexiblen Übertragungswelle (10) gegenübersteht, wobei der Flansch (15) einen ersten Schiebeblock (16) trägt; und einen mit dem ortsveränderlichen zentralen Träger (14) in dessen unterem Bereich gekoppelten zweiten Schiebeblock (17), der der dritten, ortsveränderlichen Welle (11) gegenübersteht, wobei der erste und der zweite Schiebeblock (16, 17) die Mittel (19) zum Verstellen der dritten, ortsveränderlichen Welle (11) tragen.

6. Werkzeugkopf nach Anspruch 5, dadurch **gekennzeichnet**, daß der erste Flansch (15) und der erste und der zweite Schiebeblock (16, 17) in dem geeigneten Gehäuse (9) untergebracht sind, das mit einem selbstzentrierenden Sperring (18) in seinem unteren Bereich gekoppelt ist, und daß der selbstzentrierende Sperring (18) das geeignete Gehäuse (9) in dem unteren Bereich verschließt, und auf den zweiten Schiebeblock (17) einwirkt und dessen translatorische Bewegung durch Festsetzen unterbricht.

7. Werkzeugkopf nach Anspruch 5 oder 6, dadurch **gekennzeichnet**, daß die Mittel (19) zum Verstellen der dritten, ortsveränderlichen Welle (11) mehrere Kolben (19) in radialer und verschiebbarer Zuordnung zu dem ortsveränderlichen zentralen Träger (14) sind, und daß die Kolben (19) zum Drücken und Ziehen des zentralen ortsveränderlichen Trägers (14) und damit der dritten, ortsveränderlichen Welle (11) mittels geeigneter zweiter Lager (20) geeignet sind.

8. Werkzeugkopf nach Anspruch 7, dadurch **gekennzeichnet**, daß jeder Kolben (19) an einem Ende verschiebbar und abdichtend einem Kolbenkörper (21) zugeordnet ist, der zwischen dem ersten und dem zweiten Schiebeblock (16, 17) angeordnet ist und als Führung für die Bewegung eines jeweiligen Kolbens (19) radial zu der dritten, ortsveränderlichen Welle (11) wirkt.

9. Werkzeugkopf nach Anspruch 8, dadurch **gekennzeichnet**, daß jeder Kolbenkörper (21) kreisrund und mit einem ringförmigen Luftbehälter (22) verbunden ist, von dem die Kolben (19) radial abstehen.

10. Werkzeugkopf nach Anspruch 9, dadurch **gekennzeichnet**, daß der ringförmige Luftbehälter (22) mit mindestens einem Austritt und mindestens einem Eintritt verbunden ist, um seinen Innendruck zu bestimmen.

11. Werkzeugkopf nach einem oder mehreren der vorhergehenden Ansprüche, dadurch **gekennzeichnet**, daß die dritte, ortsveränderliche Welle (11) mit einem Ende aus dem selbstzentrierenden Sperring (18) hervorsteht, dem ein Werkzeug wie z.B. ein Fräser (24) zugeordnet ist, und daß das reibende oder diamantene Element (23) dem Fräser (24) zum Bearbeiten der Kante eines steinigen Materials (2) zugeordnet ist.

12. Werkzeugkopf nach einem oder mehreren der vorhergehenden Ansprüche, dadurch **gekennzeichnet**, daß er eine Fluidleitung (25) zum Einführen von Wasser in einen Kanal (26) enthält, der in der dritten, ortsveränderlichen Welle (11) gebildet und mit dem darunterliegenden Werkzeug (24) verbunden ist und über geeignete Kanäle (27) mit der äußeren Seitenfläche des reibenden oder diamantenen Materials (23) verbunden ist.

13. Werkzeugkopf nach einem oder mehreren der vorhergehenden Ansprüche, dadurch **gekennzeichnet**, daß die Mittel (19) zum Verstellen der dritten, ortsveränderlichen Welle (11) zum radialen Bewegen der Welle (11) gegenüber ihrer Achse in alle Richtungen geeignet sind.

## Revendications

1. Mandrin particulièrement pour usiner du marbre et analogue, comprenant un moteur (3) muni d'un premier arbre fixe (7) qui est relié à un deuxième arbre de transmission souple (10) lequel interagit avec des moyens (12) qui sont appropriés pour transmettre un mouvement à un troisième arbre flottant (11) muni d'un élément abrasif ou diamanté (23), des moyens (19) étant agencés radialement par rapport audit troisième arbre flottant (11) pour repositionner ledit troisième arbre flottant (11) le long du même axe que ledit premier arbre fixe (7), ledit troisième arbre flottant (11) pouvant être à la fois rotatif autour de son propre axe et déplacé radialement par rapport à celui-ci.

2. Mandrin selon la revendication 1,
caractérisé en ce que ledit moteur (3) est un moteur à vitesse variable, ledit moteur (3) transmettant le mouvement vers ledit premier arbre fixe (7) par l'intermédiaire d'une première poulie d'entraînement (4) et d'une seconde poulie entraînée (5) qui sont mutuellement reliées par une courroie (6), ledit premier arbre fixe (7) interagissant avec des premiers paliers (8a,8b) contenus dans un corps approprié (9).

3. Mandrin selon la revendication 1 ou 2,
caractérisé en ce que l'extrémité dudit deuxième arbre de transmission souple (10) est claveté à l'extrémité libre dudit premier arbre fixe (7) et est conformée, à son autre extrémité, de façon à former un arbre secondaire rainuré (12) qui est axialement coulissable par rapport à une douille (13) rainurée de façon complémentaire.

4. Mandrin selon la revendication 3,
caractérisé en ce que ladite douille (13) est rigidement couplée audit troisième arbre flottant (11).

5. Mandrin selon une ou plusieurs des revendications précédentes, caractérisé en ce qu'il comprend : un support central flottant (14) qui est conformé comme une bague ; une bride (15) qui est couplée audit support central flottant (14) à une région supérieure dudit support central flottant (14) faisant face audit deuxième arbre de transmission souple (10), ladite bride (15) supportent un premier bloc coulissant (16) ; et un second bloc coulissant (17) qui est couplé audit support central flottant (14) dans une région inférieure dudit support central flottant (14) faisant face audit troisième arbre flottant (11), lesdits premier et second blocs coulissants (16,17) supportant lesdits moyens (19) pour repositionner ledit troisième arbre flottant (11).

6. Mandrin selon la revendication 5,
caractérisé en ce que ladite première bride (15) et lesdits premier et second blocs coulissants (16, 17) sont logés dans ledit corps approprié (9), ledit corps approprié (9) étant couplé à un anneau de verrouillage à autocentrage (18) dans une région inférieure dudit corps approprié (9) ledit anneau de verrouillage à autocentrage (18) fermant ledit corps approprié (9) au niveau de ladite région inférieure de celui-ci, ledit anneau de verrouillage à autocentrage (18) agissant sur ledit second bloc coulissant (17), le serrage dudit anneau de verrouillage à autocentrage (18) verrouillant le mouvement de translation dudit second bloc coulissant (17).

7. Mandrin selon les revendications 5 ou 6,
caractérisé en ce que lesdits moyens (19) pour repositionner ledit troisième arbre flottant (11) comprend une pluralité de pistons (19) qui sont associés radialement et de façon coulissante audit support central flottant (14), lesdits pistons (19) étant appropriés pour pousser et tirer ledit support flottant central (14) et, ainsi, ledit troisième arbre flottant (11) par l'intermédiaire de seconds paliers appropriés (20).

8. Mandrin selon la revendication 7,
caractérisé en ce que chacun desdits pistons (19) est associé, de façon coulissante et étanche, à une extrémité, à un corps de piston (21) qui est disposé entre lesdits premier et second blocs coulissants (16,17), chaque corps de piston (21) agissant comme un guide pour le mouvement d'un desdits pistons respectifs (19) radialement par rapport audit troisième arbre flottant (11).

9. Mandrin selon la revendication 8,
caractérisé en ce que chaque corps de piston (21) est circulaire et est relié à un réservoir d'air annulaire (22) à partir duquel lesdits pistons (19) font radialement saillie.

10. Mandrin selon la revendication 9,
caractérisé en ce que ledit réservoir d'air annulaire (22) est relié à au moins une sortie et à au moins une admission pour déterminer la pression à l'intérieur de celui-ci.

11. Mandrin selon une ou plusieurs des revendications précédentes,
caractérisé en ce que ledit troisième arbre flottant (11) présente une extrémité qui fait saillie à l'extérieur dudit anneau de verrouillage à autocentrage (18) et à laquelle un outil, tel que par exemple une fraise (24), est associé, ledit élément abrasif ou diamanté (23) étant associé à ladite fraise (24) pour usiner le bord d'une matière en pierre (2).

12. Mandrin selon une ou plusieurs des revendications précédentes,
caractérisé en ce qu'il comprend un joint actionné par fluide (25) pour introduire de l'eau à l'intérieur d'un canal (26) qui est formé dans ledit troisième arbre flottant (11) et est relié audit outil sous-jacent (24) et, par l'intermédiaire de conduits appropriés (27), à la surface latérale externe de ladite matière abrasive ou diamantée (23).

13. Mandrin selon une ou plusieurs des revendications précédentes,
caractérisé en ce que lesdits moyens (19) pour repositionner ledit troisième arbre flottant (11), sont adaptés pour déplacer radialement, dans toutes les directions, ledit troisième arbre flottant (11) par rapport à son propre axe.
